# EUROPÄISCHE PATENTSCHRIFT

(11) **EP 2 805 593 B1**
(45) Veröffentlichungstag und Bekanntmachung des Hinweises auf die Patenterteilung: **21.02.2018**
(21) Anmeldenummer: 14168735.0
(22) Anmeldetag: 16.05.2014
(51) Int. Cl.: A01B 73/00, A01D 75/00

(54) **GERÄTEEINHEIT MIT EINER LAGESICHERUNGSVORRICHTUNG**
DEVICE UNIT WITH A POSITION SECURING DEVICE
UNITÉ D'APPAREILS AVEC UN DISPOSITIF DESTINÉ À SÉCURISER SA POSITION

(30) Priorität: 24.05.2013 DE 102013209737
(43) Veröffentlichungstag der Anmeldung: 26.11.2014
(73) Patentinhaber: CLAAS Saulgau GmbH, 88348 Bad Saulgau (DE)
(72) Erfinder: Fischer, Josef, 88400 Biberach (DE)

(56) Entgegenhaltungen:
- EP-A1- 0 105 055
- AT-A4- 501 589
- DE-A1- 10 121 039
- FR-A1- 2 833 901

## Beschreibung

Die Erfindung betrifft eine Geräteeinheit mit einer Lagesicherungsvorrichtung zum lagemäßigen Sichern eines über eine Kupplungseinrichtung an einer landwirtschaftlichen Arbeitsmaschine anbringbaren landwirtschaftlichen Arbeitsgerätes an einem Transportwagen.

Selbstfahrende landwirtschaftliche Arbeitsmaschinen, wie z.B. Feldhäcksler und Mähdrescher, werden üblicherweise mit Arbeitsgeräten bzw. Vorsatzgeräten wie Schneidwerken, Pick-Ups, Pflückeinrichtungen und Maisgebissen versehen, um Erntegut wie Mais, Heu oder Getreide vom Feld zu bergen.

Solche Arbeitsgeräte werden zu deren Betreiben über eine Kupplungseinrichtung in der Regel vorn quer zur Fahrtrichtung verlaufend an der Arbeitsmaschine angebracht. Derzeit übliche Arbeitsgeräte können dabei eine Arbeitsbreite bzw. Länge von ca. 9 m aufweisen. Soll die Arbeitsmaschine mit dem Arbeitsgerät auf einer öffentlichen Straße bewegt werden, so ist es daher notwendig, die Gesamtbreite der Arbeitsmaschine auf ein gesetzlich zulässiges Maß zu reduzieren.

Zu diesem Zweck können derzeit übliche Arbeitsgeräte entweder vorn an der Arbeitsmaschine verbleibend in Segmenten angewinkelt bzw. aufeinander geklappt werden oder können auf einem Transportwagen gesichert an das Heck der Arbeitsmaschine angekuppelt und von dieser längs zur Fahrtrichtung ausgerichtet nachgezogen werden.

Da der derzeitige Trend zu immer größeren Motorleistungen der Arbeitsmaschinen einhergeht mit immer größeren Arbeitsbreiten von bis zu 12 m der Arbeitsgeräte, wird aufgrund der auf öffentlichen Straßen begrenzten Vorderachslast der Arbeitsmaschinen der Transport der Arbeitsgeräte auf Transportwagen an Bedeutung gewinnen.

Ziel muss es dabei sein, das Aufnehmen des Arbeitsgerätes von dem Transportwagen und das Ablegen und Lagesichern des Arbeitsgerätes auf dem Transportwagen schnell und sicher realisieren zu können.

Aus DE 101 21 039 A1 ist bekannt ein Transportwagen für einen Erntebergungsvorsatz, mit einem Fahrgestell, einer zur Aufnahme eines Erntebergungsvorsatzes eingerichteten Ablagefläche und einem Rastelement, das zwischen einer ersten Position, in der der Erntebergungsvorsatz auf dem Transportwagen ablegbar und davon abnehmbar ist, und einer zweiten Position bewegbar ist, in der es den Erntebergungsvorsatz am Transportwagen arretiert. Am Transportwagen ist ein Fühlerelement vorgesehen, das mit dem Erntegutbergungsvorsatz zusammenwirkt und eingerichtet ist, beim Ablegen des Erntebergungsvorsatzes auf den Transportwagen zu veranlassen, dass das Rastelement selbsttätig aus der ersten Position in die zweite Position gelangt. Das Verbringen des Rastelements aus der zweiten Position zurück in die erste Position wird manuell von einem Bediener bzw. Fahrer der mit dem Erntebergungsvorsatz zu versehenden Arbeitsmaschine initiiert. Dies benötigt zusätzliche Rüstzeit und kann die Betriebssicherheit reduzieren, da sich der Erntebergungsvorsatz dann in einem Zustand vom Transportwagen entriegelt und noch nicht mit der Arbeitsmaschine gekuppelt befindet.

Der Erfindung liegt die Aufgabe zugrunde, eine Geräteeinheit mit einer Lagesicherungsvorrichtung zum lagemäßigen Sichern eines über eine Kupplungseinrichtung an einer landwirtschaftlichen Arbeitsmaschine anbringbaren landwirtschaftlichen Arbeitsgerätes an einem Transportwagen bereitzustellen, so dass das Aufnehmen des Arbeitsgerätes von dem Transportwagen und das Ablegen und Lagesichern des Arbeitsgerätes auf dem Transportwagen schneller und sicherer realisierbar sind.

Die o.g. Aufgabe wird durch eine Geräteeinheit mit einer Lagesicherungsvorrichtung gemäß Anspruch 1 gelöst. Weiterbildungen der Erfindung sind in den jeweiligen abhängigen Ansprüchen definiert.

Eine erfindungsgemäße Geräteeinheit mit einer Lagesicherungsvorrichtung zum lagemäßigen Sichern eines über eine Kupplungseinrichtung an einer landwirtschaftlichen Arbeitsmaschine anbringbaren landwirtschaftlichen Arbeitsgerätes an einem Transportwagen, weist auf: einen Sensor (z.B. einen Taster), der auf Seiten des Arbeitsgerätes an der Kupplungseinrichtung vorgesehen ist und der eingerichtet ist, einen Gekuppelt-Zustand und einen Entkuppelt-Zustand der Kupplungseinrichtung zu erfassen; eine Aufnahmeeinrichtung mit einem ersten Funktionsabschnitt, der an einer ersten von zwei voneinander abgekehrten entlang einer Längsrichtung dessen verlaufenden Längsseiten des Transportwagens vorgesehen ist, und einem zweiten Funktionsabschnitt, der an einer ersten von zwei voneinander abgekehrten entlang einer Längsrichtung dessen verlaufenden Längsseiten des Arbeitsgerätes vorgesehen ist, wobei der erste und der zweite Funktionsabschnitt unter Ausbildung eines Stützlagers miteinander in Eingriff bringbar sind, sodass die erste Längsseite des Arbeitsgerätes an der ersten Längsseite des Transportwagens abgestützt ist, wobei die zweite Längsseite des Arbeitsgerätes in die gleiche Richtung wie die
zweite Längsseite des Transportwagens weist; eine Verriegelungseinrichtung, die an dem Arbeitsgerät angeordnet ist und die selektiv in einen Verriegelt-Zustand, in dem sie ein Lösen des Eingriffs der beiden Funktionsabschnitte der Aufnahmeeinrichtung verhindert, und einen Entriegelt-Zustand bringbar ist, in dem sie ein Lösen des Eingriffs der beiden Funktionsabschnitte der Aufnahmeeinrichtung zulässt; und eine Antriebseinrichtung, die an dem Arbeitsgerät angeordnet ist und die mit dem Sensor verbunden ist, um von diesem angesteuert zu werden, und mit der Verriegelungseinrichtung verbunden ist, um diese anzutreiben, sodass sie in den Verriegelt-Zustand gebracht wird, wenn der Sensor den Entkuppelt-Zustand erfasst, und in den Entriegelt-Zustand gebracht wird, wenn der Sensor den Gekuppelt-Zustand erfasst.

Dadurch, dass gemäß der Erfindung das Herstellen des Verriegelt-Zustandes und des Entriegelt-Zustandes der Verriegelungseinrichtung in direkter Abhängigkeit von dem Kupplungszustand der Kupplungseinrichtung realisiert wird, wird sichergestellt, dass das Arbeitsgerät stets entweder mit der Arbeitsmaschine gekuppelt ist oder auf dem Transportwagen lagegesichert aufgenommen ist. Dies gewährleistet, dass das Aufnehmen des Arbeitsgerätes von dem Transportwagen und das Ablegen und Lagesichern des Arbeitsgerätes auf dem Transportwagen mit höherer Betriebssicherheit realisierbar ist.

Dadurch, dass gemäß der Erfindung das Herstellen des Verriegelt-Zustandes und des Entriegelt-Zustandes der Verriegelungseinrichtung automatisch durch den Sensor bzw. den Kupplungszustand der Kupplungseinrichtung initiiert wird, können das Aufnehmen des Arbeitsgerätes von dem Transportwagen und das Ablegen und Lagesichern des Arbeitsgerätes auf dem Transportwagen auch schneller durchgeführt werden.

Gemäß der Erfindung kann der Sensor singulär oder als Kombination mechanische, elektrische, elektronische, magnetische und/oder elektromagnetische Komponenten aufweisen oder aus diesen bestehen. Gemäß der Erfindung können der erste und zweite Funktionsabschnitt der Aufnahmeeinrichtung jeweils sowohl als integrale Einheit mehrerer Komponenten als auch als Anordnung mehrerer separater Komponenten ausgebildet sein. Gemäß der Erfindung kann die Verriegelungseinrichtung sowohl direkt an dem gebildeten Stützlager als auch an einer anderen Position wirken. Gemäß der Erfindung kann auch die Antriebseinrichtung singulär oder als Kombination mechanische, elektrische, elektronische, magnetische, hydraulische und/oder elektromagnetische Komponenten aufweisen oder aus diesen bestehen.

Gemäß einer Ausführungsform der Erfindung weist der erste Funktionsabschnitt der Aufnahmeeinrichtung eine erste Stützstrebe auf, die sich der Länge nach horizontal und in Längsrichtung des Transportwagens erstreckt, und wobei der zweite Funktionsabschnitt der Aufnahmeeinrichtung eine Aussparung aufweist, die nach vertikal unten hin offen ist und die so konfiguriert ist, dass durch rittlings Übergreifen der ersten Stützstrebe diese unter Ausbildung des Stützlagers in der Aussparung in Eingriff bringbar ist, sodass die erste Längsseite des Arbeitsgerätes an der ersten Längsseite des Transportwagens abgestützt ist.

Bei einer Arbeitsmaschine wie z.B. einem Feldhäcksler wird das an dieser Aufnehmen bzw. Ankuppeln des Arbeitsgerätes üblicherweise durch annähernd vertikales nach oben Verfahren eines Ernteguteinzuges der Arbeitsmaschine realisiert, wobei zwei oben auf dem Ernteguteinzug vorgesehene Kupplungshöcker der Kupplungseinrichtung in zwei an dem Arbeitsgerät vorgesehene korrespondierende Kupplungsaufnahmen der Kupplungseinrichtung eingreifen.

Durch die o.g. erfindungsgemäße Ausgestaltung mit der ersten Stützstrebe und der Aussparung, wobei das miteinander Ineingriffbringen von erstem und zweitem Funktionsabschnitt bzw. Ausbilden des Stützlagers durch vertikales nach unten Verfahren des Arbeitsgerätes relativ zum Transportwagen realisiert wird, kann das zum Entkuppeln des Arbeitsgerätes von der Arbeitsmaschine erforderliche vertikale nach unten Verfahren des Ernteguteinzuges vorteilhaft zum Ineingriffbringen von erstem und zweitem Funktionsabschnitt bzw. Ausbilden des Stützlagers genutzt werden, da mit der Vertikalverstellung des Ernteguteinzuges synchron das daran aufgehängte Arbeitsgerät relativ zum Transportwagen vertikal nach unten verfahren wird. Mit anderen Worten können gemäß der Erfindung mit einer einzigen nach vertikal unten gerichteten Verstellbewegung, also durch vertikales nach unten Verfahren des Ernteguteinzuges der Arbeitsmaschine, sowohl das Abkuppeln des Arbeitsgerätes von der Arbeitsmaschine als auch das Ankuppeln des Arbeitsgerätes an den Transportwagen realisiert werden. Dies erhöht sowohl die Funktionssicherheit als auch die Geschwindigkeit des Rüstvorgangs.

Bevorzugt kann die erste Stützstrebe in Form eines Rundstabes vorbestimmter Länge ausgebildet sein, sodass das Arbeitsgerät beim Aufsetzen auf den Transportwagen um seine Längsachse bzw. die Längsachse des Transportwagens in eine gewünschte Lage auf dem Transportwagen schwenken kann. Dies vereinfacht das Absetzen und erhöht somit die Geschwindigkeit des Rüstvorgangs.

Bevorzugt kann die Aussparung eine Winkelkontur aufweisen, deren Öffnungsweite größer als eine Dickenabmessung bzw. ein Durchmesser der ersten Stützstrebe ist, sodass die erste Stützstrebe beim in der Aussparung Ineingriffbringen dieser an der Winkelkontur entlang in Richtung zu deren Scheitel gleiten kann und damit der Eingriff einfacher und somit schneller realisierbar ist.

Zusätzlich oder alternativ dazu kann die Aussparung bevorzugt eine zur Außenumfangskontur der ersten Stützstrebe komplementäre Kontur aufweisen, sodass die erste Stützstrebe sicherer in der Aussparung gehalten werden kann. Im Falle der Winkelkontur ist die zur Außenumfangskontur der ersten Stützstrebe komplementäre Kontur bevorzugt im Winkelscheitel angeordnet.

Gemäß noch einer Ausführungsform der Erfindung weist der erste Funktionsabschnitt der Aufnahmeeinrichtung eine zweite Stützstrebe auf, die sich der Länge nach horizontal und in Längsrichtung des Transportwagens erstreckt, wobei der zweite Funktionsabschnitt der Aufnahmeeinrichtung einen Endabschnitt aufweist, der so angeordnet ist, dass er sich bei ausgebildetem Stützlager an einem Außenumfang der zweiten Stützstrebe abstützt, und wobei die zweite Stützstrebe und der Endabschnitt gegenüber dem Stützlager um ein vorbestimmtes Maß quer zur Längsrichtung des Transportwagens nach außen und um ein vorbestimmtes Maß vertikal nach unten versetzt sind.

Mit dieser Ausgestaltung der Erfindung wird vorteilhaft ein Gegenlager bzw. Anschlag bezüglich des Stützlagers bereitgestellt. Dieses Gegenlager verhindert insbesondere bei hohem Schwerpunkt des auf dem Transportwagen abgelegten Arbeitsgerätes, wie z.B. wenn zur Längenreduzierung Segmente des Arbeitsgerätes aufeinander geklappt sind, ein um die Längsachse des Transportwagens Herunterkippen des Arbeitsgerätes und erhöht damit weiter die Betriebssicherheit.

Da sich die erste und die zweite Stützstrebe mit vorbestimmter, bevorzugt gleicher Länge horizontal und in Längsrichtung des Transportwagens erstrecken, weist die Aufnahmepaarung von Arbeitsgerät und Transportwagen in dieser Richtung eine der vorbestimmten Länge in etwa entsprechende Paarungstoleranz auf, was das lagesichere Ablegen des Arbeitsgerätes auf dem Transportwagen weiter erleichtert und somit die Funktionssicherheit und die Geschwindigkeit des Rüstvorgangs weiter erhöht.

Gemäß einer weiteren Ausführungsform der Erfindung weist der zweite Funktionsabschnitt der Aufnahmeeinrichtung eine nach vertikal unten weisende erste Gleitfläche auf, die sich der Länge nach horizontal und quer zur Längsrichtung des Arbeitsgerätes erstreckt und die gegenüber dem Stützlager um ein vorbestimmtes Maß quer zur Längsrichtung des Arbeitsgerätes nach außen versetzt ist.

Die Gleitfläche ermöglicht beim horizontalen Heranfahren des Arbeitsgerätes an den Transportwagen vorteilhaft eine Vorpositionierung des Arbeitsgerätes bezüglich des Transportwagens bzw. des zweiten Funktionsabschnittes zum ersten Funktionsabschnitt der Aufnahmeeinrichtung und erhöht somit weiter die Funktionssicherheit und die Geschwindigkeit des Rüstvorgangs.

Gemäß noch einer weiteren Ausführungsform der Erfindung weist der zweite Funktionsabschnitt der Aufnahmeeinrichtung eine zweite Gleitfläche auf, die sich unmittelbar an ein quer zur Längsrichtung des Arbeitsgerätes innenliegendes Längsende der ersten Gleitfläche anschließend erstreckt, sodass sie eine Gleitverbindung zwischen erster Gleitfläche und Stützlager bereitstellt, und wobei die erste Gleitfläche gegenüber dem Stützlager um ein vorbestimmtes Maß vertikal nach unten versetzt ist.

Durch die zweite Gleitfläche kann beim Aufsetzen des Arbeitsgerätes auf den Transportwagen vorteilhaft der zweite Funktionsabschnitt in eine für den Eingriff mit dem ersten Funktionsabschnitt vorgesehene Endposition verbracht werden. Da die erste Gleitfläche gegenüber dem Stützlager um ein vorbestimmtes Maß vertikal nach unten versetzt ist, verläuft die zweite Gleitfläche so, dass sie das nach vertikal unten Verfahren des Arbeitsgerätes relativ zum Transportwagen nachvollzieht bzw. eine Führung dafür bereitstellt. Somit können die Funktionssicherheit und die Geschwindigkeit des Rüstvorgangs weiter erhöht werden.

Wenn die Aussparung die Winkelkontur aufweist, kann die zweite Gleitfläche von einem Schenkel der Winkelkontur gebildet sein.

Gemäß einer Ausführungsform der Erfindung weist der erste Funktionsabschnitt eine Rastleiste auf, die sich der Länge nach horizontal und in Längsrichtung des Transportwagens erstreckt und die an einem vertikal oberen Längsrand dieser eine Mehrzahl von in Längsrichtung mit gleichmäßigem Abstand voneinander angeordneten Ausnehmungen hat, und wobei die Rastleiste derart angeordnet ist, dass bei gegenseitigem Eingriff von erstem und zweitem Funktionsabschnitt die erste Gleitfläche in Eingriff in einer der Ausnehmungen auf einem Bodenabschnitt dieser aufsitzt.

Diese Ausgestaltung der Erfindung ermöglicht eine zusätzliche Lagesicherung des Arbeitsgerätes auf dem Transportwagen in dessen Fahrtrichtung bzw. in Längsrichtung, wobei durch die mehreren für einen Eingriff zur Verfügung stehenden Ausnehmungen die Paarungstoleranz in Längsrichtung aufrechterhalten wird. Dies erhöht bei einfacher Handhabbarkeit der Lagesicherung die Betriebssicherheit. Bevorzugt ist die Rastleiste vertikal verlagerbar ausgebildet und nach vertikal oben hin federvorgespannt. Dies erleichtert die vertikale Positionierung der ersten Gleitfläche in einer der Ausnehmungen.

Gemäß noch einer Ausführungsform der Erfindung weist der erste Funktionsabschnitt eine erste und eine zweite Rastleiste auf, die sich jeweils der Länge nach horizontal und in Längsrichtung des Transportwagens erstrecken und die jeweils an einem vertikal oberen Längsrand dieser eine Mehrzahl von in Längsrichtung mit gleichmäßigem Abstand voneinander angeordneten Ausnehmungen vorbestimmter Längserstreckung haben, wobei die Ausnehmungen der ersten Rastleiste gegenüber den Ausnehmungen der zweiten Rastleiste in Längsrichtung um die Hälfte der Längserstreckung versetzt sind, wobei die erste und die zweite Rastleiste jeweils vertikal verlagerbar ausgebildet und nach vertikal oben hin federvorgespannt sind und derart angeordnet sind, dass bei gegenseitigem Eingriff von erstem und zweitem Funktionsabschnitt die Gleitfläche in Eingriff in einer der Ausnehmungen von einer der beiden Rastleisten auf einem Bodenabschnitt der betreffenden Ausnehmung aufsitzt.

Auch diese Ausgestaltung der Erfindung ermöglicht eine zusätzliche Lagesicherung des Arbeitsgerätes auf dem Transportwagen in dessen Fahrtrichtung bzw. in Längsrichtung, wobei durch die mehreren für einen Eingriff zur Verfügung stehenden Ausnehmungen die Paarungstoleranz in Längsrichtung aufrechterhalten wird. Durch das Vorsehen von zwei oder mehr bezüglich ihrer Ausnehmungen zueinander versetzten Rastleisten wird die Einrastwahrscheinlichkeit bzw. -sicherheit erhöht, was bei weiterhin einfacher Handhabbarkeit der Lagesicherung die Betriebssicherheit weiter erhöht. Dadurch, dass die Rastleisten vertikal verlagerbar ausgebildet und nach vertikal oben hin federvorgespannt sind, wird die vertikale Positionierung der ersten Gleitfläche in einer der Ausnehmungen erleichtert.

Eine erfindungsgemäße Geräteeinheit weist ein landwirtschaftliches Arbeitsgerät, das über eine Kupplungseinrichtung an einer landwirtschaftlichen Arbeitsmaschine anbringbar ist und das eine erste und eine zweite Längsseite hat, die voneinander abgekehrt entlang einer Längsrichtung dessen verlaufen; einen Transportwagen für das Arbeitsgerät, wobei der Transportwagen eine erste und eine zweite Längsseite hat, die voneinander abgekehrt entlang einer Längsrichtung dessen verlaufen, und eine Lagesicherungsanordnung auf, die an den jeweiligen ersten Längsseiten von Arbeitsgerät und Transportwagen vorgesehen ist und die zwei Lagesicherungsvorrichtungen gemäß einer, mehreren oder allen zuvor beschriebenen Ausführungsformen der Erfindung in jeder denkbaren Kombination aufweist, wobei eine erste Lagesicherungsvorrichtung der beiden Lagesicherungsvorrichtungen in Längsrichtung des Transportwagens benachbart zu einer Vorderradachse dessen angeordnet ist und eine zweite Lagesicherungsvorrichtung der beiden Lagesicherungsvorrichtungen in Längsrichtung des Transportwagens benachbart zu einer Hinterradachse dessen angeordnet ist.

Hinsichtlich der mit der erfindungsgemäßen Geräteeinheit erzielbaren Vorteile und Wirkungen wird zur Vermeidung von Wiederholungen auf die obigen Ausführungen zur erfindungsgemäßen Lagesicherungsvorrichtung verwiesen, welche analog für die erfindungsgemäße Geräteeinheit gelten.

Gemäß einer Ausführungsform der Erfindung weist bei jeder der beiden Lagesicherungsvorrichtungen der zweite Funktionsabschnitt der Aufnahmeeinrichtung eine hakenförmige Einbuchtung auf, die zur zweiten Längsseite des Arbeitsgerätes hin offen ist und die durch eine Horizontalverlagerung der ersten Längsseite des Arbeitsgerätes in Richtung zur ersten Längsseite des Transportwagens hin mit einem zur Ausbildung des Stützlagers dienenden Abschnitt des ersten Funktionsabschnitts in Eingriff bringbar ist, sodass die Horizontalverlagerung des Arbeitsgerätes auf den Transportwagen übertragbar ist.

Somit lässt sich beim horizontalen Heranfahren des Arbeitsgerätes an den relativ leichten Transportwagen dieser leicht so zum Arbeitsgerät ausrichten, dass der erste und der zweite Funktionsabschnitt der beiden Lagesicherungsvorrichtungen miteinander in Eingriff gebracht werden können.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren detaillierter beschrieben.
- Fig.1: zeigt eine perspektivische Seitenansicht einer Geräteeinheit gemäß einer Ausführungsform der Erfindung.
- Fig.2: zeigt eine andere perspektivische Seitenansicht der erfindungsgemäßen Geräteeinheit.
- Fig.3: zeigt eine perspektivische Vorderansicht der erfindungsgemäßen Geräteeinheit.
- Fig.4: zeigt eine andere perspektivische teilweise weggebrochene Vorderansicht der erfindungsgemäßen Geräteeinheit.
- Fig.5: zeigt eine perspektivische vergrößerte teilweise weggebrochene Teilansicht der erfindungsgemäßen Geräteeinheit.

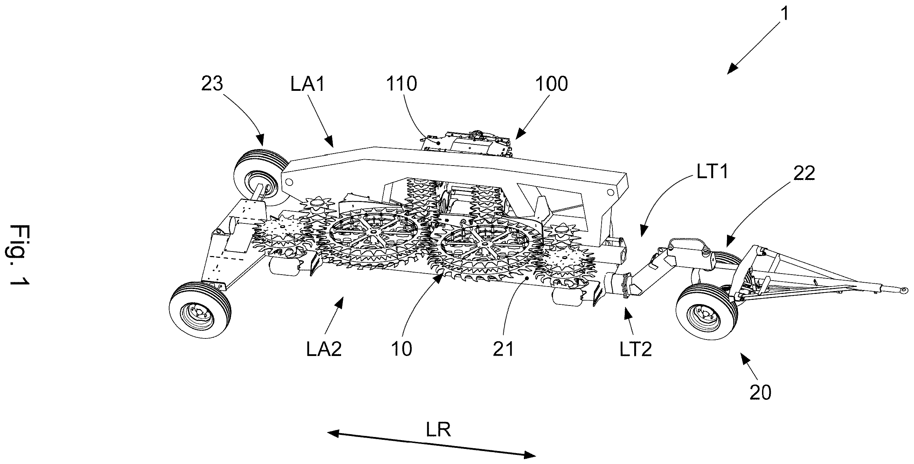

Die Figuren 1 bis 5 zeigen in unterschiedlichen Ansichten eine Geräteeinheit 1 gemäß einer Ausführungsform der Erfindung.

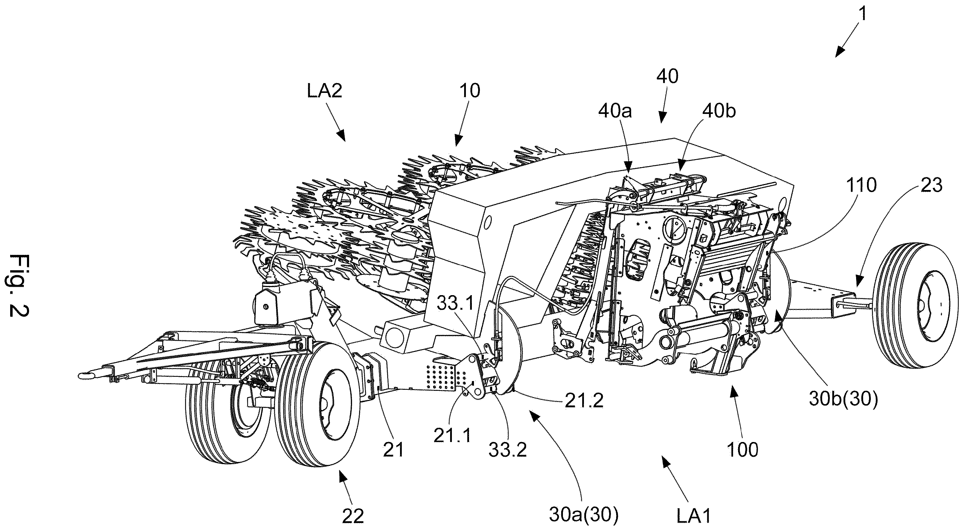

Wie insbesondere in Fig. 1 und Fig. 2 gezeigt, weist die Geräteeinheit 1 ein landwirtschaftliches Arbeitsgerät 10, einen Transportwagen 20 für das Arbeitsgerät 10 und eine Lagesicherungsanordnung 30 auf zum lagemäßigen Sichern des Arbeitsgerätes 10 an bzw. auf dem Transportwagen 20.

Das Arbeitsgerät 10 ist hier beispielhaft als ein in eine Zusammengeklappt-Stellung verbrachtes nicht mit allen Einzelheiten dargestelltes Maisgebiss ausgebildet und ist über eine Kupplungseinrichtung 40 als Vorsatzgerät an einem Ernteguteinzug 110 einer nicht vollständig gezeigten landwirtschaftlichen Arbeitsmaschine 100 anbringbar. Das Arbeitsgerät 10 weist eine erste Längsseite LA1 und eine zweite Längsseite LA2 auf, die voneinander abgekehrt entlang einer Längsrichtung LR dessen verlaufen.

Der Transportwagen 20 weist seinerseits ebenfalls eine erste Längsseite LT1 und eine zweite Längsseite LT2 auf, die voneinander abgekehrt entlang einer Längsrichtung LR dessen verlaufen. In der in Fig. 1 gezeigten Konfiguration, wobei das Arbeitsgerät 10 auf dem Transportwagen 20 platziert ist, stimmen die die Längsrichtungen LR von Arbeitsgerät 10 und Transportwagen 20 überein und sind daher gemeinsam mit "LR" bezeichnet.

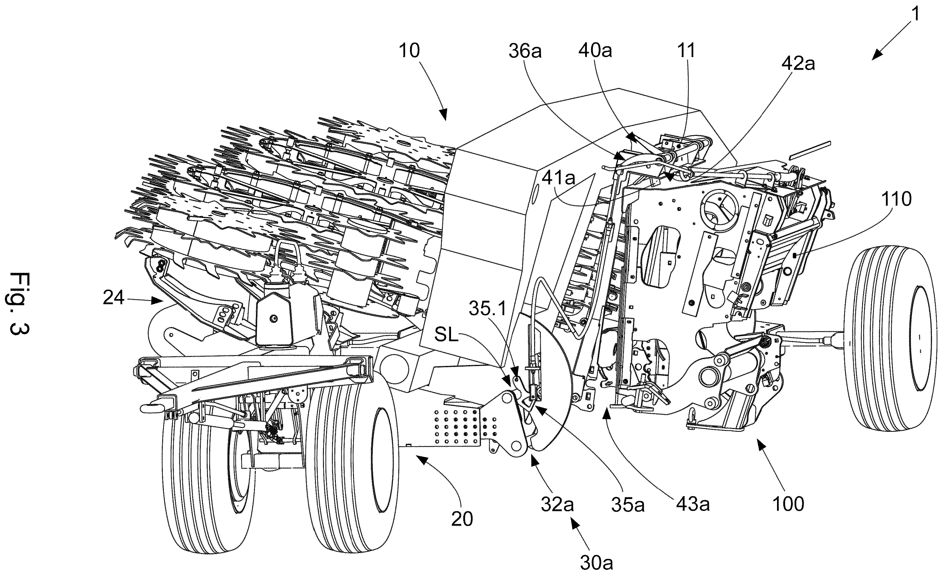

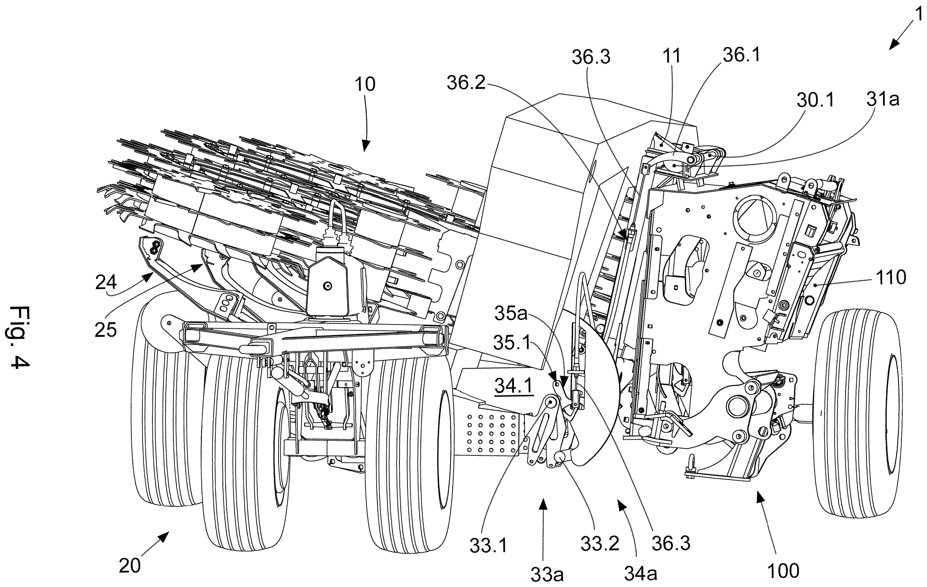

Der Transportwagen 20 weist eine Tragfähigkeit von etwa 7 t Gesamtgewicht und einen teleskopierbaren Hauptrahmen 21 auf. Mit dem teleskopierbaren Hauptrahmen 21 ist es möglich, die Länge des Transportwagens 20 an Arbeitsgeräte 10 unterschiedlicher Arbeitsbreite (Länge in Längsrichtung LR) anzupassen. Zur Längsverstellung wird eine Hinterradachse 23 des Transportwagens 20 festgesetzt und bei gelöster Verriegelung (nicht gezeigt) der Transportwagen 20 in Längsrichtung LR auseinandergezogen oder zusammengeschoben. Bei einer derartigen Längsverstellung des Transportwagens 20 werden an einem vorderen bzw. hinteren Teil des Transportwagens 20 vorgesehene Arbeitsgerätaufnahmen 24, 25 (siehe Figuren 3 und 4) synchron mitverstellt.

Um mit dem höheren Schwerpunkt des zusammengeklappten Arbeitsgerätes 10 auf dem Transportwagen 20 genügend Kippstabilität zu gewährleisten, ist eine Spurbreite der Hinterradachse 23 des Transportwagens 20 gegenüber einer Spurbreite einer Vorderradachse 22 des Transportwagens 20 auf etwa 2,75 m verbreitert. Eine nicht dargestellte Druckluftbremse gewährleistet die Zulassung des Transportwagens 20 für eine Transportgeschwindigkeit von 50 km/h auf einer öffentlichen Straße.

Die Lagesicherungsanordnung 30 ist an den jeweiligen ersten Längsseiten LA1 bzw. LT1 von Arbeitsgerät 10 und Transportwagen 20 vorgesehen und weist eine erste Lagesicherungsvorrichtung 30a, die in Längsrichtung LR des Transportwagens 20 benachbart zur Vorderradachse 22 dessen angeordnet ist, und eine zweite Lagesicherungsvorrichtung 30b auf, die in Längsrichtung LR des Transportwagens 20 benachbart zur Hinterradachse 23 dessen angeordnet ist. Die erste Lagesicherungsvorrichtung 30a und die zweite Lagesicherungsvorrichtung 30b sind im Wesentlichen identisch ausgebildet.

Die Kupplungseinrichtung 40 ist an der ersten Längsseite LA1 des Arbeitsgerätes 10 und an einem Einzugsgehäuse (nicht bezeichnet) des Ernteguteinzugs 110 vorgesehen und weist eine erste Kupplungseinheit 40a, die benachbart zur ersten Lagesicherungsvorrichtung 30a angeordnet ist, und eine zweite Kupplungseinheit 40b auf, die benachbart zur zweiten Lagesicherungsvorrichtung 30b angeordnet ist. Auch die erste Kupplungseinheit 40a und die zweite Kupplungseinheit 40b sind im Wesentlichen identisch ausgebildet.

Da die beiden Lagesicherungsvorrichtungen 30a, 30b im Wesentlichen identisch ausgebildet sind und auch die beiden Kupplungseinheiten 40a, 40b im Wesentlichen identisch ausgebildet sind, werden im Folgenden nur die erste Lagesicherungsvorrichtung 30a und die erste Kupplungseinheit 40a detaillierter beschrieben werden, wobei deren detaillierte Strukturen mit dem Bezugszeichenzusatz "b" anstatt "a" gedanklich im Wesentlichen identisch auf die zweite Lagesicherungsvorrichtung 30b bzw. die zweite Kupplungseinheit 40b zu übertragen sind.

Wie am besten in Fig. 3 und Fig. 4 ersichtlich, weist die erste Kupplungseinheit 40a einen Kupplungshöcker 41a, der an einer Oberseite des Einzugsgehäuses des Ernteguteinzugs 110 der Arbeitsmaschine 100 angebracht ist, und eine korrespondierende Kupplungsaufnahme 42a auf, die auf der ersten Längsseite LA1 des Arbeitsgerätes 10 mit einer Aufnahmeöffnung (nicht bezeichnet) dieser nach unten weisend an einem oberen Längsrand einer Trägergruppe bzw. eines Pendelrahmens 11 des Arbeitsgerätes 10 angebracht ist.

Die erste Kupplungseinheit 40a weist ferner eine Verriegelung 43a auf, deren arbeitsmaschinenseitiger Teil an einem unteren Rand einer Vorderseite des Einzugsgehäuses des Ernteguteinzugs 110 der Arbeitsmaschine 100 angebracht ist und deren arbeitsgeräteseitiger Teil an einem unteren Längsrand der Trägergruppe 11 des Arbeitsgerätes 10 angebracht ist.

Um das Arbeitsgerät 10 an der Arbeitsmaschine 100 als Vorsatzgerät anzukuppeln, wird der Ernteguteinzug 110 der Arbeitsmaschine 100 unter das Höhenniveau der Kupplungsaufnahmen der Kupplungseinheiten 40a, 40b abgesenkt und werden die Kupplungshöcker der Kupplungseinheiten 40a, 40b horizontal unter die Kupplungsaufnahmen der Kupplungseinheiten 40a, 40b gefahren. Dann wird der Ernteguteinzug 110 der Arbeitsmaschine 100 z.B. hydraulisch nach vertikal oben verfahren, bis die Kupplungshöcker vollständig in ihrer korrespondierenden Kupplungsaufnahme in Eingriff sind und somit das Arbeitsgerät 10 durch eine weitere Aufwärtsbewegung des Ernteguteinzugs 110 aushebbar ist.

Wie am besten in den Figuren 3 bis 5 ersichtlich, weist die erste Lagesicherungsvorrichtung 30a einen Sensor 31a, eine Aufnahmeeinrichtung 32a, eine Verriegelungseinrichtung 35a und eine Antriebseinrichtung 36a auf.

Der Sensor 31a ist auf Seiten des Arbeitsgerätes 10 in der Kupplungsaufnahme 42a der ersten Kupplungseinheit 40a der Kupplungseinrichtung 40 vorgesehen und ist eingerichtet, einen Gekuppelt-Zustand und einen Entkuppelt-Zustand der ersten Kupplungseinheit 40a der Kupplungseinrichtung 40 zu erfassen.

Genauer ist der Sensor 31a als federvorgespannter mechanischer Tasthebel ausgebildet, der an einer drehbar an dem oberen Längsrand der Trägergruppe 11 des Arbeitsgerätes 10 gelagerten Welle 30.1 der Lagesicherungsanordnung 30 befestigt ist, sodass der Tasthebel die Welle 30.1 dreht, wenn der Kupplungshöcker 41a in seine korrespondierende Kupplungsaufnahme 42a eingreift und den Tasthebel gegen die Federvorspannung nach oben verdrängt bzw. verschwenkt. Wenn der Kupplungshöcker 41a aus seiner korrespondierenden Kupplungsaufnahme 42a herausgefahren wird, wird der Tasthebel durch seine Federvorspannung nach unten bis zu einem Eingang der Kupplungsaufnahme 42a zurückgeschwenkt.

Die Aufnahmeeinrichtung 32a weist einen ersten Funktionsabschnitt 33a, der an der ersten Längsseite LT1 des Transportwagens 20 vorgesehen ist, und einen zweiten Funktionsabschnitt 34a auf, der an der ersten Längsseite LA1 des Arbeitsgerätes 10 vorgesehen ist.

Der erste Funktionsabschnitt 33a und der zweite Funktionsabschnitt 34a sind unter Ausbildung eines Stützlagers SL miteinander in Eingriff bringbar, sodass die erste Längsseite LA1 des Arbeitsgerätes 10 an der ersten Längsseite LT1 des Transportwagens 20 abgestützt ist, wobei die zweite Längsseite LA2 des Arbeitsgerätes 10 in die gleiche Richtung (quer zur Längsrichtung LR) wie die zweite Längsseite LT2 des Transportwagens 20 weist.

Die Verriegelungseinrichtung 35a ist an dem Arbeitsgerät 10 angeordnet und ist selektiv in einen Verriegelt-Zustand (wie in den Figuren 1-5 gezeigt), in dem sie ein Lösen des Eingriffs der beiden Funktionsabschnitte 33a, 34a der Aufnahmeeinrichtung 32a verhindert, und einen Entriegelt-Zustand bringbar, in dem sie ein Lösen des Eingriffs der beiden Funktionsabschnitte 33a, 34a der Aufnahmeeinrichtung 32a zulässt.

Die Antriebseinrichtung 36a ist an dem Arbeitsgerät 10 angeordnet und ist mit dem Sensor 31a verbunden, um von diesem angesteuert zu werden, und mit der Verriegelungseinrichtung 35a verbunden, um diese anzutreiben, sodass sie in den Verriegelt-Zustand gebracht wird, wenn der Sensor 31a den Entkuppelt-Zustand der ersten Kupplungseinheit 40a der Kupplungseinrichtung 40 erfasst, und in den Entriegelt-Zustand gebracht wird, wenn der Sensor 31a den Gekuppelt-Zustand der ersten Kupplungseinheit 40a der Kupplungseinrichtung 40 erfasst.

Genauer weist der erste Funktionsabschnitt 33a der Aufnahmeeinrichtung 32a eine erste Stützstrebe 33.1 und eine zweite Stützstrebe 33.2 auf, die sich mit vorbestimmter Länge jeweils zwischen zwei Halteplatten 21.1, 21.2 des Hauptrahmens 21 und an diesen befestigt der Länge nach horizontal und in Längsrichtung LR des Transportwagens 20 erstrecken und die hier jeweils als Rundstab ausgebildet sind, wie in Fig. 2 gezeigt.

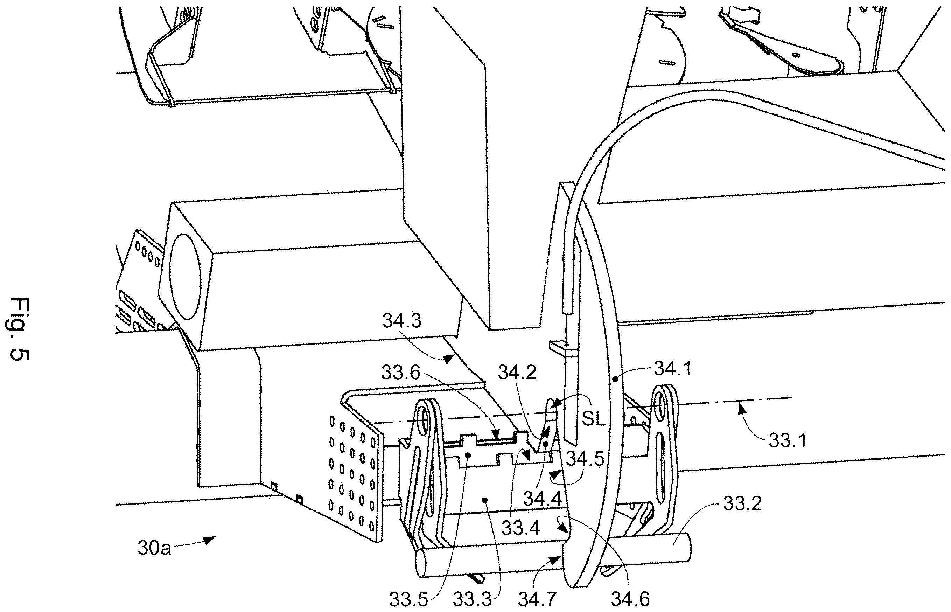

Der erste Funktionsabschnitt 33a weist außerdem eine erste Rastleiste 33.3 und eine zweite Rastleiste 33.5 auf (siehe Fig. 5), die sich jeweils der Länge nach horizontal und in Längsrichtung LR des Transportwagens 20 erstrecken und die jeweils an einem vertikal oberen Längsrand dieser eine Mehrzahl von in Längsrichtung LR mit gleichmäßigem Abstand voneinander angeordneten Ausnehmungen 33.4 bzw. 33.6 vorbestimmter Längserstreckung haben. Die Ausnehmungen 33.4 der ersten Rastleiste 33.3 sind gegenüber den Ausnehmungen 33.6 der zweiten Rastleiste in Längsrichtung LR um hier z.B. ca. die Hälfte der Längserstreckung versetzt, wobei die erste und die zweite Rastleiste 33.3, 33.5 jeweils schwenkbar an der ersten Stützstrebe 33.1 gelagert und dadurch vertikal verlagerbar ausgebildet sind und über jeweilige nicht gezeigte Federn nach vertikal oben hin federvorgespannt sind.

Wie insbesondere aus Fig. 4 und Fig. 5 ersichtlich, weist der zweite Funktionsabschnitt 34a der Aufnahmeeinrichtung 32a eine stabile Tragplatte 34.1 auf, die an der Trägergruppe 11 des Arbeitsgerätes 10 lagefest montiert ist. Die Tragplatte 34.1 weist eine in einer Winkelkontur bzw. Winkelform ausgeführte Aussparung 34.2, eine erste Gleitfläche 34.3, eine zweite Gleitfläche 34.4, die sich direkt die erste Gleitfläche 34.3 anschließt und die von einem sich vom Arbeitsgerät 10 weg öffnend verlaufenden Schenkel der Winkelkontur der Aussparung 34.2 gebildet ist, eine dritte Gleitfläche 34.5, die von einem sich zum Arbeitsgerät 10 hin öffnend verlaufenden Schenkel der Winkelkontur der Aussparung 34.2 gebildet ist, eine hakenförmige Einbuchtung 34.6, die sich direkt an die dritte Gleitfläche 34.5 anschließt, und einen Endabschnitt 34.7 auf, der sich direkt an die Einbuchtung 34.6 anschließt.

Die Aussparung 34.2 der Tragplatte 34.1 ist nach vertikal unten hin offen und weist eine zur Außenumfangskontur der ersten Stützstrebe 33.1 komplementäre Kontur auf, die an die zweite und die dritte Gleitfläche 34.4, 34.5 angrenzend im Winkelscheitel der Winkelkontur der Aussparung 34.2 angeordnet ist.

Die Aussparung 34.2 der Tragplatte 34.1 ist so konfiguriert, dass durch rittlings Übergreifen der ersten Stützstrebe 33.1 diese unter Ausbildung des Stützlagers SL in der Aussparung 34.2 in Eingriff bringbar ist, sodass die erste Längsseite LA1 des Arbeitsgerätes 10 an der ersten Längsseite LT1 des Transportwagens 20 abgestützt ist.

Der Endabschnitt 34.7 der Tragplatte 34.1 ist so angeordnet, dass er sich bei ausgebildetem Stützlager SL an einem Außenumfang der zweiten Stützstrebe 33.2 abstützt, wobei die zweite Stützstrebe 33.2 und der Endabschnitt 34.7 gegenüber dem Stützlager SL um ein vorbestimmtes Maß quer zur Längsrichtung LR des Transportwagens 20 nach außen und um ein vorbestimmtes Maß vertikal nach unten versetzt sind, sodass sie ein Gegenlager bezüglich des Stützlagers SL bereitstellen.

Die erste Gleitfläche 34.3 weist nach vertikal unten, erstreckt sich der Länge nach horizontal und quer zur Längsrichtung LR des Arbeitsgerätes 10 bzw. des Transportwagens 20 und ist gegenüber dem Stützlager SL um ein vorbestimmtes Maß quer zur Längsrichtung LR des Arbeitsgerätes 10 vom Arbeitsgerät 10 weg nach außen versetzt bzw. quer zur Längsrichtung LR des Transportwagens 20 zum Transportwagen 20 hin nach innen versetzt.

Die zweite Gleitfläche 34.4 erstreckt sich unmittelbar anschließend an ein quer zur Längsrichtung LR des Arbeitsgerätes 10 innenliegendes bzw. quer zur Längsrichtung LR des Transportwagens 20 außenliegendes Längsende der ersten Gleitfläche 34.3, sodass sie eine Gleitverbindung zwischen erster Gleitfläche 34.4 und Stützlager SL bzw. dem Winkelscheitel der Winkelkontur der Aussparung 34.2 bereitstellt, wobei die erste Gleitfläche 34.3 gegenüber dem Stützlager SL bzw. dem Winkelscheitel der Winkelkontur der Aussparung 34.2 um ein vorbestimmtes Maß vertikal nach unten versetzt ist.

Die erste und die zweite Rastleiste 33.3, 33.5 sind derart angeordnet, dass bei gegenseitigem Eingriff von erstem und zweitem Funktionsabschnitt 33a, 34a, d.h. bei Eingriff der ersten Stützstrebe 33.1 in dem Winkelscheitel der Winkelkontur der Aussparung 34.2, sodass das Stützlager SL gebildet ist, die erste Gleitfläche 34.3 in Eingriff in einer der Ausnehmungen 33.4, 33.6 von einer der beiden Rastleisten 33.3, 33.5 auf einem Bodenabschnitt der betreffenden Ausnehmung 33.4, 33.6 aufsitzt, wie in Fig. 5 gezeigt.

Die hakenförmige Einbuchtung 34.6 ist zur zweiten Längsseite LA2 des Arbeitsgerätes 10 hin offen ausgebildet und ist durch eine Horizontalverlagerung der ersten Längsseite LA1 des Arbeitsgerätes 10 in Richtung zur ersten Längsseite LT1 des Transportwagens 20 hin mit der zur Ausbildung des Stützlagers SL dienenden ersten Stützstrebe 33.1 des ersten Funktionsabschnitts 33a in Eingriff bringbar, sodass die Horizontalverlagerung des Arbeitsgerätes 10 auf den Transportwagen 20 übertragbar ist.

Wie insbesondere aus den Figuren 3 und 4 ersichtlich, ist die Verriegelungseinrichtung 35a von einer Klaue gebildet, die über ein Schwenklager 35.1 schwenkbar an der Tragplatte 34.1 des zweiten Funktionsabschnitts 34a der Aufnahmeeinrichtung 32a angelenkt ist und die im Verriegelt-Zustand (wie in den Figuren 1-5 gezeigt) die erste Stützstrebe 33.1 des ersten Funktionsabschnitts 33a der Aufnahmeeinrichtung 32a von unten mit einem Hakenabschnitt umgreift und im Entriegelt-Zustand nach oben weggeschwenkt ist, sodass der Hakenabschnitt außer Eingriff mit der ersten Stützstrebe 33.1 ist. Die Verriegelungseinrichtung 35a ist durch eine nicht dargestellte Feder in Richtung ihres Verriegelt-Zustandes federvorgespannt, sodass sie die Feder des Sensors 31a unterstützt.

Wie außerdem insbesondere aus den Figuren 3 und 4 ersichtlich, weist die Antriebseinrichtung 36a einen Hebel 36.1, der an der Welle 30.1 der Lagesicherungsanordnung 30 befestigt ist, sodass er mechanisch mit dem Sensor 31a verbunden ist und synchron mit einem Verschwenken des Sensors 31a (Tasthebel) verschwenkt wird, und eine Bowdenzuganordnung 36.2 auf, deren Bowdenzug 36.3 sowohl mit der von der Klaue gebildeten Verriegelungseinrichtung 35a als auch mit dem Hebel 36.1 der Antriebseinrichtung 36a mechanisch verbunden ist, sodass eine Schwenkbewegung des Hebels 36.1 direkt auf die Verriegelungseinrichtung 35a übertragen wird.

Soll nun das an der Arbeitsmaschine aufgehängte Arbeitsgerät 10 auf dem Transportwagen 20 abgelegt werden, so wird das Arbeitsgerät 10 von der ersten Längsseite LT1 des Transportwagens 20 aus horizontal an diesen herangefahren.

Beim Ablegen des Arbeitsgerätes 10 auf dem Transportwagen 20 ermöglichen die Einbuchtungen an den Tragplatten der beiden Lagesicherungseinrichtungen 30a, 30b das Heranfahren auf Anschlag. D.h., sollte es beim Heranfahren nicht gelingen, genau im rechten Winkel vor dem Transportwagen 20 zu stehen, kann dieser mit den Einbuchtungen an den Tragplatten in Eingriff mit der jeweils korrespondierenden ersten Stützstrebe durch leichtes Wegschieben ausgerichtet werden, wobei die Einbuchtungen eine nahezu horizontale Kraftübertragung auf den leichten Transportwagen 20 ermöglichen, wodurch dieser nur sehr geringe Reibkräfte an den Rädern entgegensetzen kann. Anschließend können durch Absenken des Ernteguteinzuges 110 und damit des Arbeitsgerätes 10 die ersten Stützstreben der beiden Lagesicherungseinrichtungen 30a, 30b an den dritten Gleitflächen der Tragplatten der beiden Lagesicherungseinrichtungen 30a, 30b entlang bis in die Winkelscheitel der Aussparungen der Tragplatten der beiden Lagesicherungseinrichtungen 30a, 30b gleiten, sodass die beiden Stützlager SL gebildet werden.

Alternativ können beim Ablegen des Arbeitsgerätes 10 auf dem Transportwagen 20 die ersten Gleitflächen der Tragplatten der beiden Lagesicherungseinrichtungen 30a, 30b auf die ersten Stützstreben der beiden Lagesicherungseinrichtungen 30a, 30b aufgesetzt werden, sodass beim horizontalen Heranfahren des Arbeitsgerätes 10 an den Transportwagen 20 die ersten Stützstreben entlang der ersten Gleitflächen und nachfolgend entlang der zweiten Gleitflächen der Tragplatten der beiden Lagesicherungseinrichtungen 30a, 30b bis in die Winkelscheitel der Aussparungen der Tragplatten der beiden Lagesicherungseinrichtungen 30a, 30b gleiten, sodass die beiden Stützlager SL gebildet werden.

Da sich die ersten und die zweiten Stützstreben der beiden Lagesicherungseinrichtungen 30a, 30b mit vorbestimmter, bevorzugt gleicher Länge horizontal und in Längsrichtung LR des Transportwagens 20 erstrecken, weist die Aufnahmepaarung von Arbeitsgerät 10 und Transportwagen 20 in dieser Richtung eine der vorbestimmten Länge in etwa entsprechende Paarungstoleranz (z.B. etwa 30 cm) auf, was das lagesichere Ablegen des Arbeitsgerätes 10 auf dem Transportwagen 20 erleichtert.

Die Stützlager SL stellen die radiale Abstützung für das Arbeitsgerät 10 bereit. Die Abstützung in Fahrtrichtung des Transportwagens 20 wird durch den Eingriff der ersten Gleitflächen der Tragplatten der beiden Lagesicherungseinrichtungen 30a, 30b in der jeweiligen Ausnehmung der Rastleisten der beiden Lagesicherungseinrichtungen 30a, 30b gewährleistet.

Mit Ausbildung der Stützlager SL und weiterem Absenken des Ernteguteinzuges 110 und Entriegeln der Verriegelungen der beiden Kupplungseinheiten 40a, 40b der Kupplungseinrichtung 40 gleiten die Kupplungshöcker der beiden Kupplungseinheiten 40a, 40b der Kupplungseinrichtung 40 aus ihrer jeweiligen Kupplungsaufnahme heraus, wodurch die Sensoren (Tasthebel) der beiden Lagesicherungseinrichtungen 30a, 30b nach unten schwenken, dadurch auch die Hebel der Antriebseinrichtungen der beiden Lagesicherungseinrichtungen 30a, 30b nach unten schwenken und somit die Verriegelungseinrichtungen der beiden Lagesicherungseinrichtungen 30a, 30b in ihren Verriegelt-Zustand gebracht werden.

Das Aufnehmen des Arbeitsgerätes von dem Transportwagen 20 geschieht in umgekehrter Weise, wobei die Kupplungshöcker der beiden Kupplungseinheiten 40a, 40b der Kupplungseinrichtung 40 durch Hochfahren des Ernteguteinzuges 110 in ihre jeweilige Kupplungsaufnahme eingreifen, wodurch die Sensoren (Tasthebel) der beiden Lagesicherungseinrichtungen 30a, 30b nach oben schwenken, dadurch auch die Hebel der Antriebseinrichtungen der beiden Lagesicherungseinrichtungen 30a, 30b nach oben schwenken und somit die Verriegelungseinrichtungen der beiden Lagesicherungseinrichtungen 30a, 30b in ihren Entriegelt-Zustand gebracht werden.

Die oben beschriebene Automatikfunktion macht die Übergabe des Arbeitsgerätes 10 sehr sicher, da dieses stets entweder an der Arbeitsmaschine 100 oder an dem Transportwagen 20 gesichert ist.

Im Fazit stellt die Erfindung eine Lagesicherungsvorrichtung zum lagemäßigen Sichern eines über eine Kupplungseinrichtung an einer landwirtschaftlichen Arbeitsmaschine anbringbaren landwirtschaftlichen Arbeitsgerätes an einem Transportwagen sowie eine mit zwei solchen Lagesicherungsvorrichtungen ausgerüstete Geräteeinheit eines landwirtschaftlichen Arbeitsgerätes und eines Transportwagens für das Arbeitsgerät so bereit, dass das Aufnehmen des Arbeitsgerätes von dem Transportwagen und das Ablegen und Lagesichern des Arbeitsgerätes auf dem Transportwagen schneller und sicherer realisierbar sind.

### Bezugszeichenliste

- 1: Geräteeinheit
- 10: Arbeitsgerät
- 11: Trägergruppe
- 20: Transportwagen
- 21: Hauptrahmen
- 21.1: Halteplatte
- 21.2: Halteplatte
- 22: Vorderradachse
- 23: Hinterradachse
- 24: Arbeitsgerätaufnahme
- 25: Arbeitsgerätaufnahme
- 30: Lagesicherungsanordnung
- 30a: erste Lagesicherungsvorrichtung
- 30b: zweite Lagesicherungsvorrichtung
- 30.1: Welle
- 31a: Sensor
- 32a: Aufnahmeeinrichtung
- 33a: erster Funktionsabschnitt
- 33.1: erste Stützstrebe
- 33.2: zweite Stützstrebe
- 33.3: erste Rastleiste
- 33.4: Ausnehmung
- 33.5: zweite Rastleiste
- 33.6: Ausnehmung
- 34a: zweiter Funktionsabschnitt
- 34.1: Tragplatte
- 34.2: Aussparung
- 34.3: erste Gleitfläche
- 34.4: zweite Gleitfläche
- 34.5: dritte Gleitfläche
- 34.6: Einbuchtung
- 34.7: Endabschnitt
- 35a: Verriegelungseinrichtung
- 35.1: Schwenklager
- 36a: Antriebseinrichtung
- 36.1: Hebel
- 36.2: Bowdenzuganordnung
- 36.3: Bowdenzug
- 40: Kupplungseinrichtung
- 40a: erste Kupplungseinheit
- 40b: zweite Kupplungseinheit
- 41a: Kupplungshöcker
- 42a: Kupplungsaufnahme
- 43a: Verriegelung
- 100: Arbeitsmaschine
- 110: Ernteguteinzug
- SL: Stützlager
- LA1: erste Längsseite
- LA2: zweite Längsseite
- LT1: erste Längsseite
- LT2: zweite Längsseite
- LR: Längsrichtung

## Patentansprüche

1. Geräteeinheit mit einer Lagesicherungsvorrichtung (30a, 30b) zum lagemäßigen Sichern eines über eine Kupplungseinrichtung (40) an einer landwirtschaftlichen Arbeitsmaschine (100) anbringbaren landwirtschaftlichen Arbeitsgerätes (10) an einem Transportwagen (20), aufweisend:
einen Sensor (31a),
eine Aufnahmeeinrichtung (32a) mit einem ersten Funktionsabschnitt (33a), der an einer ersten Längsseite (LT1) von zwei voneinander abgekehrten entlang einer Längsrichtung (LR) dessen verlaufenden Längsseiten (LT1, LT2) des Transportwagens (20) vorgesehen ist, und einem zweiten Funktionsabschnitt (34a), der an einer ersten Längsseite (LA1) von zwei voneinander abgekehrten entlang einer Längsrichtung (LR) dessen verlaufenden Längsseiten (LA1, LA2) des Arbeitsgerätes (10) vorgesehen ist, wobei der erste und der zweite Funktionsabschnitt (33a, 34a) unter Ausbildung eines Stützlagers (SL) miteinander in Eingriff bringbar sind, sodass die erste Längsseite (LA1) des Arbeitsgerätes (10) an der ersten Längsseite (LT1) des Transportwagens (20) abgestützt ist, wobei die zweite Längsseite (LA2) des Arbeitsgerätes (10) in die gleiche Richtung wie die zweite Längsseite (LT2) des Transportwagens (20) weist,
eine Verriegelungseinrichtung (35a), die selektiv in einen Verriegelt-Zustand, in dem sie ein Lösen des Eingriffs der beiden Funktionsabschnitte (33a, 34a) verhindert, und einen Entriegelt-Zustand bringbar ist, in dem sie ein Lösen des Eingriffs der beiden Funktionsabschnitte (33a, 34a) zulässt, und
eine Antriebseinrichtung (36a), die mit dem Sensor (31a) verbunden ist, um von diesem angesteuert zu werden, und mit der Verriegelungseinrichtung (35a) verbunden ist, **dadurch gekennzeichnet, dass** der Sensor (31a), die Verriegelungseinrichtung (35a) und die Antriebseinrichtung (36a) an dem Arbeitsgerät (10) angeordnet sind und der Sensor (31a) auf Seiten des Arbeitsgerätes (10) an der Kupplungseinrichtung (40) vorgesehen ist und dazu eingerichtet ist, einen Gekuppelt-Zustand und einen Entkuppelt-Zustand der Kupplungseinrichtung (40) zu erfassen, um die Verriegelungseinrichtung (35a) anzutreiben, sodass sie in den Verriegelt-Zustand gebracht wird, wenn der Sensor (31a) den Entkuppelt-Zustand erfasst, und in den Entriegelt-Zustand gebracht wird, wenn der Sensor (31a) den Gekuppelt-Zustand erfasst.

2. Geräteeinheit gemäß Anspruch 1, wobei der erste Funktionsabschnitt (33a) der Aufnahmeeinrichtung (32a) eine erste Stützstrebe (33.1) aufweist, die sich der Länge nach horizontal und in Längsrichtung (LR) des Transportwagens (20) erstreckt, und wobei der zweite Funktionsabschnitt (34a) der Aufnahmeeinrichtung (32a) eine Aussparung (34.2) aufweist, die nach vertikal unten hin offen ist und die so konfiguriert ist, dass durch rittlings Übergreifen der ersten Stützstrebe (33.1) diese unter Ausbildung des Stützlagers (SL) in der Aussparung (34.2) in Eingriff bringbar ist, sodass die erste Längsseite (LA1) des Arbeitsgerätes (10) an der ersten Längsseite (LT1) des Transportwagens (20) abgestützt ist.

3. Geräteeinheit gemäß Anspruch 1 oder 2, wobei der erste Funktionsabschnitt (33a) der Aufnahmeeinrichtung (32a) eine zweite Stützstrebe (33.2) aufweist, die sich der Länge nach horizontal und in Längsrichtung (LR) des Transportwagens (20) erstreckt, wobei der zweite Funktionsabschnitt (34a) der Aufnahmeeinrichtung (32a) einen Endabschnitt (34.7) aufweist, der so angeordnet ist, dass er sich bei ausgebildetem Stützlager (SL) an einem Außenumfang der zweiten Stützstrebe (33.2) abstützt, und wobei die zweite Stützstrebe (33.2) und der Endabschnitt (34.7) gegenüber dem Stützlager (SL) um ein vorbestimmtes Maß quer zur Längsrichtung (LR) des Transportwagens (20) nach außen und um ein vorbestimmtes Maß vertikal nach unten versetzt sind.

4. Geräteeinheit gemäß einem der Ansprüche 1 bis 3, wobei der zweite Funktionsabschnitt (34a) der Aufnahmeeinrichtung (32a) eine nach vertikal unten weisende erste Gleitfläche (34.3) aufweist, die sich der Länge nach horizontal und quer zur Längsrichtung (LR) des Arbeitsgerätes (10) erstreckt und die gegenüber dem Stützlager (SL) um ein vorbestimmtes Maß quer zur Längsrichtung (LR) des Arbeitsgerätes (10) nach außen versetzt ist.

5. Geräteeinheit gemäß Anspruch 4, wobei der zweite Funktionsabschnitt (34a) der Aufnahmeeinrichtung (32a) eine zweite Gleitfläche (34.4) aufweist, die sich unmittelbar an ein quer zur Längsrichtung (LR) des Arbeitsgerätes (10) innenliegendes Längsende der ersten Gleitfläche (34.3) anschließend erstreckt, sodass sie eine Gleitverbindung zwischen erster Gleitfläche (34.3) und Stützlager (SL) bereitstellt, und wobei die erste Gleitfläche (34.3) gegenüber dem Stützlager (SL) um ein vorbestimmtes Maß vertikal nach unten versetzt ist.

6. Geräteeinheit gemäß Anspruch 4 oder 5, wobei der erste Funktionsabschnitt (33a) eine Rastleiste (33.3, 33.5) aufweist, die sich der Länge nach horizontal und in Längsrichtung (LR) des Transportwagens (20) erstreckt und die an einem vertikal oberen Längsrand dieser eine Mehrzahl von in Längsrichtung (LR) mit gleichmäßigem Abstand voneinander angeordneten Ausnehmungen (33.4, 33.6) hat, und wobei die Rastleiste (33.3, 33.5) derart angeordnet ist, dass bei gegenseitigem Eingriff von erstem und zweitem Funktionsabschnitt (33a, 34a) die erste Gleitfläche (34.3) in Eingriff in einer der Ausnehmungen (33.4, 33.6) auf einem Bodenabschnitt dieser aufsitzt.

7. Geräteeinheit gemäß Anspruch 6, wobei die Rastleiste (33.3, 33.5) vertikal verlagerbar ausgebildet ist und nach vertikal oben hin federvorgespannt ist.

8. Geräteeinheit gemäß Anspruch 4 oder 5, wobei der erste Funktionsabschnitt (33a) eine erste und eine zweite Rastleiste (33.3, 33.5) aufweist, die sich jeweils der Länge nach horizontal und in Längsrichtung (LR) des Transportwagens (20) erstrecken und die jeweils an einem vertikal oberen Längsrand dieser eine Mehrzahl von in Längsrichtung (LR) mit gleichmäßigem Abstand voneinander angeordneten Ausnehmungen (33.4, 33.6) vorbestimmter Längserstreckung haben, wobei die Ausnehmungen (33.4) der ersten Rastleiste (33.3) gegenüber den Ausnehmungen (33.6) der zweiten Rastleiste (33.5) in Längsrichtung (LR) um etwa die Hälfte der Längserstreckung versetzt sind, wobei die erste und die zweite Rastleiste (33.3, 33.5) jeweils vertikal verlagerbar ausgebildet und nach vertikal oben hin federvorgespannt sind und derart angeordnet sind, dass bei gegenseitigem Eingriff von erstem und zweitem Funktionsabschnitt (33a, 34a) die erste Gleitfläche (34.3) in Eingriff in einer der Ausnehmungen (33.4, 33.6) von einer der beiden Rastleisten (33.3, 33.5) auf einem Bodenabschnitt der betreffenden Ausnehmung (33.4, 33.6) aufsitzt.

9. Geräteeinheit (1) gemäß einem der Ansprüche 1 bis 8 mit:
einem landwirtschaftlichen Arbeitsgerät (10), das über eine Kupplungseinrichtung (40) an einer landwirtschaftlichen Arbeitsmaschine (100) anbringbar ist und das eine erste und eine zweite Längsseite (LA1, LA2) aufweist, die voneinander abgekehrt entlang einer Längsrichtung (LR) dessen verlaufen,
einem Transportwagen (20) für das Arbeitsgerät (10), wobei der Transportwagen (20) eine erste und eine zweite Längsseite (LT1, LT2) aufweist, die voneinander abgekehrt entlang einer Längsrichtung (LR) dessen verlaufen, und
einer Lagesicherungsanordnung (30), die an den jeweiligen ersten Längsseiten (LA1, LT1) von Arbeitsgerät (10) und Transportwagen (20) vorgesehen ist und die zwei Lagesicherungsvorrichtungen (30a, 30b) aufweist,
wobei eine erste Lagesicherungsvorrichtung (30a) der beiden Lagesicherungsvorrichtungen (30a, 30b) in Längsrichtung (LR) des Transportwagens (20) benachbart zu einer Vorderradachse (22) dessen angeordnet ist und eine zweite Lagesicherungsvorrichtung (30b) der beiden Lagesicherungsvorrichtungen (30a, 30b) in Längsrichtung (LR) des Transportwagens (20) benachbart zu einer Hinterradachse (23) dessen angeordnet ist.

10. Geräteeinheit (1) gemäß Anspruch 9, wobei bei jeder der beiden Lagesicherungsvorrichtungen (30a, 30b) der zweite Funktionsabschnitt (34a) der Aufnahmeeinrichtung (32a) eine hakenförmige Einbuchtung (34.6) aufweist, die zur zweiten Längsseite (LA2) des Arbeitsgerätes (10) hin offen ist und die durch eine Horizontalverlagerung der ersten Längsseite (LA1) des Arbeitsgerätes (10) in Richtung zur ersten Längsseite (LT1) des Transportwagens (20) hin mit einem zur Ausbildung des Stützlagers (SL) dienenden Abschnitt des ersten Funktionsabschnitts (33a) in Eingriff bringbar ist, sodass die Horizontalverlagerung des Arbeitsgerätes (10) auf den Transportwagen (20) übertragbar ist.

## Claims

1. An implement unit comprising a position securing apparatus (30a, 30b) for securing an agricultural working implement (10) which can be mounted to an agricultural working machine (100) by way of a coupling device (40) in position to a transport carriage (20) comprising:
a sensor (31a),
a receiving device (32a) having a first functional portion (33a) which is provided at a first longitudinal side (LT1) of two longitudinal sides (LT1, LT2) of the transport carriage (20), that face away from each other and extend along a longitudinal direction (LR) thereof, and a second functional portion (34a) which is provided at a first longitudinal side (LA1) of two longitudinal sides (LA1, LA2) of the working implement (10), that face away from each other and extend along a longitudinal direction (LR) thereof, wherein the first and second functional portions (33a, 33b) can be brought into engagement with each other to provide a support mounting (SL) so that the first longitudinal side (LA1) of the working implement (10) is supported at the first longitudinal side (LT1) of the transport carriage (20), wherein the second longitudinal side (LA2) of the working implement (10) faces in the same direction as the second longitudinal side (LT2) of the transport carriage (20),
a locking device (35a) which can be selectively moved into a locking condition in which it prevents release of the engagement of the two functional portions (33a, 34a) and an unlocking condition in which it allows release of the engagement of the two functional portions (33a, 34a), and
a drive device (36a) which is connected to the sensor (31a) to be actuated by same and is connected to the locking device (35a), **characterised in that** the sensor (31a), the locking device (35a) and the drive device (36a) are arranged on the working implement (10) and the sensor (31a) is provided on the part of the working implement (10) on the coupling device (40) and is adapted to detect a coupled condition and an uncoupled condition of the coupling device (40) to drive the locking device (35a) so that it is moved into the locked condition when the sensor (31a) detects the uncoupled condition and is moved into the unlocked condition when the sensor (31a) detects the coupled condition.

2. An implement unit according to claim 1 wherein the first functional portion (33a) of the receiving device (32a) has a first support brace (33.1) which extends horizontally in respect of length and in the longitudinal direction (LR) of the transport carriage ((20) and wherein the second functional portion (34a) of the receiving device (32a) has a recess (34.2) which is open vertically downwardly and which is of such a configuration that by engaging over the first support brace (33.1) in straddling relationship same can be brought into engagement in the recess (34.2) to provide the support mounting (SL) so that the first longitudinal side (LA1) of the working implement (10) is supported at the first longitudinal side (LT1) of the transport carriage (20).

3. An implement unit according to claim 1 or claim 2 wherein the first functional portion (33a) of the receiving device (32a) has a second support brace (33.2) which extends horizontally in respect of length and in the longitudinal direction (LR) of the transport carriage (20), wherein the second functional portion (34a) of the receiving device (32a) has an end portion (34.7) which is so arranged that when the support mounting (SL) is formed it is supported at an outer periphery of the second support brace (33.2) and wherein the second support brace (33.2) and the end portion (34.7) are displaced with respect to the support mounting (SL) outwardly by a predetermined amount transversely relative to the longitudinal direction (LR) of the transport carriage (20) and vertically downwardly by a predetermined amount.

4. An implement unit according to one of claims 1 to 3 wherein the second functional portion (34a) of the receiving device (32a) has a vertically downwardly facing first sliding surface (34.3) which extends horizontally in respect of length and transversely relative to the longitudinal direction (LR) of the working implement (10) and which is displaced outwardly relative to the support mounting (SL) by a predetermined amount transversely relative to the longitudinal direction (LR) of the working implement (10).

5. An implement unit according to claim 4 wherein the second functional portion (34a) of the receiving device (32a) has a second sliding surface (34.4) which extends directly adjoining a longitudinal end of the first sliding surface (34.3), which end is disposed inwardly transversely relative to the longitudinal direction (LR) of the working implement (10), so that a sliding connection is afforded between the first sliding surface (34.3) and the support mounting (SL), and wherein the first sliding surface (34.3) is displaced vertically downwardly by a predetermined amount with respect to the support mounting (SL).

6. An implement unit according to claim 4 or claim 5 wherein the first functional portion (33a) has a latching bar (33.3, 33.5) which extends horizontally in respect of length and in the longitudinal direction (LR) of the transport carriage (20) and which at a vertically upper longitudinal edge thereof has a plurality of recesses (33.4, 33.6) arranged at uniform spacings from each other in the longitudinal direction (LR), and wherein the latching bar (33.3, 33.5) is so arranged that upon mutual engagement of the first and second functional portions (33a, 34a) the first sliding surface (34.3) rests in engagement in one of the recesses (33.4, 33.6) on a base portion of same.

7. An implement unit according to claim 6 wherein the latching bar (33.3, 33.5) is adapted to be vertically displaceable and is spring-loaded vertically upwardly.

8. An implement unit according to claim 4 or claim 5 wherein the first functional portion (33a) has a first and a second latching bar (33.3, 33.5) which respectively extend horizontally in respect of length and in the longitudinal direction (LR) of the transport carriage (20) and which respectively have at a vertically upper longitudinal edge thereof a plurality of recesses (33.4, 33.6) of predetermined longitudinal extent, that are arranged at uniform spacings from each other in the longitudinal direction (LR), wherein the recesses (33.4) of the first latching bar (33.3) are displaced with respect to the recesses (33.6) of the second latching bar (33.5) in the longitudinal direction (LR) by about half of the longitudinal extent, wherein the first and second latching bars (33.3, 33.5) are respectively adapted to be vertically displaceable and are spring-loaded vertically upwardly and are arranged in such a way that upon mutual engagement of the first and second functional portions (33a, 34a) the first sliding surface (34.3) rests in engagement in one of the recesses (33.4, 33.6) of one of the two latching bars (33.3, 33.5) on a base portion of the recess (33.4, 33.6) in question.

9. An implement unit (1) according to one of claims 1 to 8 comprising
an agricultural working implement (10) which can be mounted to an agricultural working machine (100) by way of a coupling device (40) and which has a first and a second longitudinal side (LA1, LA2) which extend facing away from each other along a longitudinal direction (LR) thereof,
a transport carriage (20) for the working implement (10), wherein the transport carriage (20) has a first and a second longitudinal side (LT1, LT2) which extend facing from each other along a longitudinal direction (LR) thereof, and
a position securing arrangement (30) which is provided at the respective first longitudinal sides (LA1, LT1) of the working implement (10) and the transport carriage (20) and which has two position securing apparatuses (30a, 30b),
wherein a first position securing apparatus (30a) of the two position securing apparatuses (30a, 30b) is arranged in the longitudinal direction (LR) of the transport carriage (20) adjacent to a front axle (22) thereof and a second position securing apparatus (30b) of the two position securing apparatuses (30a, 30b) is arranged in the longitudinal direction (LR) of the transport carriage (20) adjacent to a rear axle (23) thereof.

10. An implement unit (1) according to claim 9 wherein in each of the two position securing apparatuses (30a, 30b) the second functional portion (34a) of the receiving device (32a) has a hook-shaped indentation (34.6) which is open towards the second longitudinal side (LA2) of the working implement (10) and which by a horizontal displacement of the first longitudinal side (LA1) of the working implement (10) in a direction towards the first longitudinal side (LT1) of the transport carriage (20) can be brought into engagement with a portion of the first functional portion (33a), that serves to form the support mounting (SL) so that the horizontal displacement of the working implement (10) can be transmitted to the transport carriage (20).

## Revendications

1. Unité d'outil comprenant un dispositif de sûreté de positionnement (30a, 30b) pour la sûreté de positionnement, sur un chariot de transport (20), d'un outil de travail agricole (10) apte à être monté sur une machine de travail agricole (100) par l'intermédiaire d'un équipement d'accouplement (40), comprenant :
un capteur (31a),
un équipement de réception (32a) comprenant une première portion fonctionnelle (33a), prévue sur un premier côté longitudinal (LT1) de deux côtés longitudinaux (LT1, LT2) du chariot de transport (20, lesquels sont distants l'un de l'autre et s'étendent selon une direction longitudinale (LR) de celui-ci, et comprenant une seconde portion fonctionnelle (34a) qui est prévue sur un premier côté longitudinal (LA1) de deux côtés longitudinaux (LA1, LA2) de l'outil de travail (10), lesquels sont distants l'un de l'autre et s'étendent selon une direction longitudinale (LR) de celui-ci, la première et la seconde portion fonctionnelle (33a, 34a) pouvant être amenées en prise mutuelle en formant un point d'appui (SL), de façon que le premier côté longitudinal (LA1) de l'outil de travail (10) soit supporté sur le premier côté longitudinal (LT1) du chariot de transport (20), le second côté longitudinal (LA2) de l'outil de travail (10) étant orienté dans la même direction que le second côté longitudinal (LT2) du chariot de transport (20),
un équipement de verrouillage (35a) qui peut être amené sélectivement dans un état verrouillé, dans lequel il empêche un relâchement de la prise entre les deux portions fonctionnelles (33a, 34a), et un état déverrouillé, dans lequel il autorise un relâchement de la prise entre les deux portions fonctionnelles (33a, 34a), et
un équipement d'entraînement (36a) qui est relié au capteur (31a) pour être commandé par celui-ci et qui est relié à l'équipement de verrouillage (35a), **caractérisée en ce que** le capteur (31a), l'équipement de verrouillage (35a) et l'équipement d'entraînement (36a) sont disposés sur l'outil de travail (10), et le capteur (31a) est prévu du côté de l'outil de travail (10) sur l'équipement d'accouplement (40) et est agencé pour détecter un état accouplé et un état désaccouplé de l'équipement d'accouplement (40) pour entraîner l'équipement de verrouillage (35a), de façon qu'il soit amené à l'état verrouillé si le capteur (31a) détecte l'état désaccouplé et à l'état déverrouillé si le capteur (31a) détecte l'état accouplé.

2. Unité d'outil selon la revendication 1, la première portion fonctionnelle (33a) de l'équipement de réception (32a) comportant un premier bras d'appui (33.1) qui, dans le sens de sa longueur, s'étend horizontalement et dans la direction longitudinale (LR) du chariot de transport (20), et la seconde portion fonctionnelle (34a) de l'équipement de réception (32a) comportant un évidement (34.2) qui est ouvert verticalement vers le bas et qui est configuré de façon qu'en chevauchant le premier bras d'appui (33.1) il puisse être amené en prise en formant le point d'appui (SL) dans l'évidement (34.2), de façon que le premier côté longitudinal (LA1) de l'outil de travail (10) prenne appui sur le premier côté longitudinal (LT1) du chariot de transport (20).

3. Unité d'outil selon la revendication 1 ou 2, la première portion fonctionnelle (33a) de l'équipement de réception (32a) comportant un second bras d'appui (33.2) qui, dans le sens de sa longueur, s'étend horizontalement et dans la direction longitudinale (LR) du chariot de transport (20), la seconde portion fonctionnelle (34a) de l'équipement de réception (32a) comportant une portion extrême (34.7) qui est disposée de façon à prendre appui sur une périphérie extérieure du second bras d'appui (33.2) quand le point d'appui (SL) est formé, et le second bras d'appui (33.2) et la portion extrême (34.7) étant déportés, par rapport au point d'appui (SL), vers l'extérieur selon une mesure prédéterminée transversalement à la direction longitudinale (LR) du chariot de transport (20) et verticalement vers le bas selon une mesure prédéterminée.

4. Unité d'outil selon une des revendications 1 à 3, la seconde portion fonctionnelle (34a) de l'équipement de réception (32a) comportant une première surface de glissement (34.3) orientée verticalement vers le bas, qui, dans le sens de sa longueur, s'étend horizontalement et transversalement à la direction longitudinale (LR) de l'outil de travail (10) et qui, par rapport au point d'appui (SL), est déportée vers l'extérieur selon une mesure prédéterminée transversalement à la direction longitudinale (LR) de l'outil de travail (10).

5. Unité d'outil selon la revendication 4, la seconde portion fonctionnelle (34a) de l'équipement de réception (32a) comportant une seconde surface de glissement (34.4) qui s'étend dans le prolongement direct d'une extrémité longitudinale de la première surface de glissement (34.3) située à l'intérieur transversalement à la direction longitudinale (34.3) de l'outil de travail (10), de façon à créer une liaison glissante entre la première surface de glissement (34.3) et le point d'appui (SL), et la première surface de glissement (34.3) étant déportée verticalement vers le bas selon une mesure prédéterminée par rapport au point d'appui,(SL).

6. Unité d'outil selon la revendication 4 ou 5, **caractérisée en ce que** la première portion fonctionnelle (33a) comporte une barrette de crantage (33.3, 33.5) qui, dans le sens de sa longueur, s'étend horizontalement et dans la direction longitudinale (LR) du chariot de transport (20) et comporte, sur un bord longitudinal vertical supérieur, une pluralité d'évidements (33.4, 33.6) disposés à distance régulière les uns des autres dans la direction longitudinale (LR), et la barrette de crantage (33.3, 33.5) étant disposée de façon que, en cas de prise mutuelle entre les première et seconde portions fonctionnelles (33a, 34a), la première surface de glissement (34.3) repose en prise dans un des évidements (33.4, 33.6) sur une portion de fond de celui-ci.

7. Unité d'outil selon la revendication 6, **caractérisée en ce que** la barrette de crantage (33.3, 33.5) est conçue avec une possibilité de déplacement vertical et est soumise à une précontrainte élastique verticalement vers le haut.

8. Unité d'outil selon la revendication 4 ou 5, la première portion fonctionnelle (33a) comporte une première et une seconde barrette de crantage (33.3, 33.5) qui, dans le sens de leur longueur, s'étendent chacune horizontalement et dans la direction longitudinale (LR) du chariot de transport (20), et qui comportent chacune, sur un bord longitudinal vertical supérieur, une pluralité d'évidements (33.4, 33.6) d'extension longitudinale prédéterminée disposés à distance régulière les uns des autres dans la direction longitudinale (LR), les évidements (33.4) de la première barrette de crantage (33.3) étant décalés d'environ la moitié de l'extension longitudinale par rapport aux évidements (33.6) de la seconde barrette de crantage (33.5), la première et la seconde barrette de crantage (33.3, 33.5) étant chacune conçues avec une possibilité de déplacement vertical et soumises à une précontrainte élastique verticalement vers le haut, et étant disposées de façon qu'en cas de prise mutuelle entre les première et seconde portions fonctionnelles (33a, 34a) la première surface de glissement (34.3) repose en prise dans un des évidements (33.4, 33.6) d'une des deux barrettes de crantage (33.3, 33.5) sur la portion de fond de l'évidement correspondant (33.4, 33.6).

9. Unité d'outil (1) selon une des revendications 1 à 8, comprenant :
un outil de travail agricole (10) qui, par l'intermédiaire d'un équipement d'accouplement (40), peut être monté sur une machine de travail agricole (100) et qui comporte un premier et un second côté longitudinal (LA1, LA2) qui s'étendent selon une direction longitudinale (LR) en étant distants l'un de l'autre,
un chariot de transport (20) pour l'outil de travail (10), le chariot de transport (20) comportant un premier et un second côté longitudinal (LT1, LT2) qui s'étendent selon une direction longitudinale (LR) en étant distants l'un de l'autre,
un agencement de sûreté de positionnement (30) qui est prévu sur les premiers côtés longitudinaux respectifs (LA1, LT1) de l'outil de travail (10) et du chariot de transport (20) et qui comporte deux dispositifs de sûreté de positionnement (30a, 30b),
un premier dispositif de sûreté de positionnement (30a) des deux dispositifs de sûreté de positionnement (30a, 30b) étant disposé, dans la direction longitudinale (LR) du chariot de transport (20), au voisinage d'un essieu de roue avant (22) de celui-ci, et un second dispositif de sûreté de positionnement (30b) des deux dispositifs de sûreté de positionnement (30a, 30b) étant disposé, dans la direction longitudinale (LR) du chariot de transport (20), au voisinage d'un essieu de roue arrière (23) de celui-ci.

10. Unité d'outil (1) selon la revendication 9, dans chacun des deux dispositifs de sûreté de positionnement (30a, 30b), la seconde portion fonctionnelle (34a) de l'équipement de réception (32a) comportant une cuvette formant crochet (34.6) qui est ouverte vers le second côté longitudinal (LA2) de l'outil de travail (10) et qui, par un déplacement horizontal du premier côté longitudinal (LA1) de l'outil de travail (10) en direction du premier côté longitudinal (LT1) du chariot de transport (20), peut être amenée en prise avec une portion de la première portion fonctionnelle (33a) servant à former le point d'appui (SL), de sorte que le déplacement horizontal de l'outil de travail (10) est transférable au chariot de transport (20).
